# NEUE EUROPÄISCHE PATENTSCHRIFT

(11) **EP 2 138 560 B2**
(45) Veröffentlichungstag und Bekanntmachung des Hinweises auf die Entscheidung über den Einspruch: **01.04.2015**
(45) Hinweis auf die Patenterteilung: 16.02.2011
(21) Anmeldenummer: 08011487.9
(22) Anmeldetag: 24.06.2008
(51) Int. Cl.: C11D 3/37, C08F 251/00

(54) **Reinigungsmittel enthaltend Pfropfcopolymere**
Cleaner containing graft copolymers
Produit de nettoyage contenant des copolymères greffés

(43) Veröffentlichungstag der Anmeldung: 30.12.2009
(73) Patentinhaber: Cognis IP Management GmbH, 40589 Düsseldorf (DE)
(72) Erfinder: Schunicht Christoph, 40595 Düsseldorf (DE); Albers Thomas, 40597 Düsseldorf (DE); Lemke Ute, 41470 Neuss (DE); Langen Michael, 40724 Hilden (DE); Eskuchen Rainer, 40764 Langenfeld (DE)

(56) Entgegenhaltungen:
- EP-A- 0 441 197
- EP-A- 0 526 800
- EP-A- 0 725 131
- EP-A- 1 881 017
- WO-A-94/01476
- WO-A1-92/10433
- WO-A1-95/00624
- CA-A1- 2 074 747
- DE-A1- 4 239 076
- DE-A1- 4 314 661
- DE-A1- 4 316 740
- DE-A1- 4 321 429
- US-A- 5 227 446
- US-A- 5 760 154
- US-A- 5 783 616
- US-A1- 2008 020 948

## Beschreibung

Die vorliegende Erfindung betrifft die Verwendung von wasserlöslichen Pfropfcopolymeren in Reinigungsmitteln für harte Oberflächen, bestimmte wasserlösliche Pfropfcopolymere und Reinigungsmittel, die diese Pfropfcopolymere enthalten.

Reinigungsmittel für harte Oberflächen, beispielsweise Allzweck- Küchen- oder Badreiniger, aber auch Geschirrspülmittel, enthalten häufig Inhaltsstoffe, die zu einer Hydrophilierung von Oberflächen führen, was dazu führt, dass Wasser auf diesen Oberflächen besser spreitet und Wassertropfen damit schneller einen Film bilden, der leichter von der Oberfläche ablaufen kann. Aus der WO 94/26858 sind z.B. flüssige Reinigungsmittel bekannt, die neben einem Tensid auch anionische Polymere, enthaltend Acrylsäure, Methacrylsäure oder Maleinsäureanhydrid als Monomeren, aufweisen. Die DE 195 03 116A1 offenbart Pfropfcopolymere auf Basis von Sacchariden, die als gepfropfte Seitenketten Acrylsäure oder Acrylamide enthalten. Konkret offenbart werden aber darin nur Pfropfcopolymere auf Basis von Maltodextrin und Maleinsäureanhydrid und deren Einsatz als Additive in Geschirrspülmitteln.

Pfropfcopolymere sind ebenfalls aus EP 1881017, DE 4321429, US 5760154 und DE 4239076 bekannt. Sulfonierte Pfropfcopolymere auf Basis von Sacchariden und monoethylenisch ungesättigten Monomeren in Reinigungsmitteln zur Reinigung von harten Oberflächen sind in der US 2008/0020948 A1 beschrieben. Die CA 2,074,747 A1 beschreibt ein Copolymer auf Basis von Dimethyldiallylammoniumchlorid.

Es besteht aber ein Bedarf an weiter verbesserten Additiven für Reinigungsmittel, und zwar sowohl was deren Leistung angeht als auch in Bezug auf biologische Abbaubarkeit.

Es wurde gefunden, das Propfcopolymere auf Basis von Sacchariden, die mit mindestens zwei unterschiedlichen Monomeren gepfropft werden, in Bezug auf ihre anwendungstechnischen Eigenschaften wie auch auf die biologische Abbaubarkeit Vorteile aufweisen.

Eine erste Ausführungsform der Erfindung betrifft die Verwendung von wasserlöslichen Pfropfcopolymeren, hergestellt durch radikalisch initiierte Pfropfpolymerisation von 40 bis 90 Gew.-% (A) Monosacchariden, Oligosacchariden, Polysacchariden und deren Derivaten, mit 5 bis 40 Gew.-% Monomeren (B), ausgewählt aus der Gruppe der ethylenisch ungesättigten C3-C10 Monocarbonsäuren oder deren Alkali- oder Ammoniumsalze und 10 bis 50 Gew.-% Monomeren (C), ausgewählt aus der Gruppe Methacrylamidopropyltrimethylammoniumchlorid (MAPTAC), Acrylamidopropyltrimethylammoniumchlorid (APTAC) und/oder Diallyldimethylammoniumchlorid DADMAC) in Reinigungsmitteln, die neben dem Pfropfpolymeren mindestens noch eine tensidische Komponente enthalten, zur Verbesserung des Glanzerhaltes von harten Oberflächen, die mit diesen Reinigungsmitteln in Kontakt gebracht worden sind.

Als Pfropfcopolymere werden die nach den dem Fachmann bekannten Verfahren der Pfropfcopolymerisation hergestellten Polymere bezeichnet. Propfcopolymere sind an sich bekannte Verbindungen. In der DE 195 03 116 und der EP 441 197 A2 werden jeweils Propfcopolymere auf Basis von Zuckern, Acrylaten und N-haltigen oder Sulfogruppenhaltigen Monomeren beschrieben, wobei auch eine Verwendung dieser Polymeren als Additiv in Wasch- oder Reinigungsmitteln offenbart wird. Konkret offenbart die Schrift aber nur Polymere, die Maleinsäure und Acrylsäure als Monomerbestandteil aufweist. Außerdem fehlt der Schrift die Offenbarung, dass die Copolymeren geeignet sind harte Obelilächen wirksam zu hydrophilieren bzw. den Obelilächen einen längeren Glanz zu vermitteln, als ohne die Behandlung mit den Polymeren.

Im vorliegenden Fall wird die Pfropfgrundlage der erfindungsgemäßen Pfropfcopolymeren durch Saccharide (A), und zwar Mono-, Oligo- und/oder Polysaccharide gebildet. Monosaccharide sind lineare Polyhydroxyaldehyde (Aldosen) bzw. Polyhydroxyketone (Ketosen). Bei den Monosacchariden spielen vor allem die Pentosen und Pentulosen (C₅H₁0₅) sowie die Hexosen und Hexulosen (C₆H₁₂0₆) eine Rolle. Geeignete (Aldo-)Pentosen sind z.B. d-Ribose, d-Xylose und 1-Arabinose. Als (Aldo-)Hexosen seien d-Glucose, d-Mannose und d-Galactose genannt; bei den Hexulosen (früher Ketohexosen) sind vor allem d-Fructose und Sorbose zu nennen. Die 6-Desoxyzucker 1-Fucose und 1-Rhamnose sind ebenfalls geeignete Hexosen. Oligosaccharide sind allgemein Moleküle, die durch Kondensation von zwei bis ca. zehn Monosacchariden entstehen und zur Gruppe der Glycane gehören. Hierbei können lineare, verzweigte und cyclische Oligosaccharide gebildet werden.
Zu den Polysacchariden gehören Biopolymere wie Stärke und Glycogen sowie das Struktur-Polysaccharid Cellulose, die ebenso wie Dextran und Tunicin als Polykondensationsprodukt der d-Glucose aufgefasst werden können (Glucane), Inulin als Polykondensat der d-Fructose (Fructane), Chitin, Alginsäure und andere.

Polysaccharide sind bevorzugte Komponenten vom Typ (A). Hier kommen sowohl die Stärke selbst, aber insbesondere deren Abbauprodukte in Frage. Stärke gehört ebenso wie Glycogen oder Cellulose zu den Homoglycanen und ist ein Polykondensationsprodukt von d-Glucose. Stärke besteht aus 3 verschiedenen d-Glucopyranose-Polymeren, der Amylose, dem Amylopektin und einer so genannten Zwischenfraktion, die auch als anormales Amylopektin bezeichnet wird. Durch enzymatischen oder chemischen Abbau werden aus Stärke Maltodextrine gebildet. Unter Maltodextrin werden Gemische aus Monomeren, Dimeren, Oligomeren und Polymeren der Glucose gefasst. Je nach Hydrolysegrad unterscheidet sich die prozentuale Zusammensetzung. Diese wird durch das Dextrose-Äquivalent beschrieben, das bei Maltodextrin zwischen 3 und 40 liegt. Maltodextrine sind eine besonders bevorzugte Komponente (A) im Sinne der vorliegenden technischen Lehre. Aber auch Stärke, die auf chemischem Weg abgebaut wurde, z.B. durch säurekatalysierte Hydrolyse oder auf oxidativem Weg, ist als Hauptkette bzw. Pfropfgrundlage der eliindungsgemäß verwendeten Propfcopolymere geeignet.

Als Monomere vom Typ (B) kommen generell ethylenisch ungesättigten C3-C1 0 Monocarbonsäuren (verzweigt oder linear) oder deren Alkali- oder Ammoniumsalze in Frage. Bevorzugte Monomeren sind die Acrylsäure oder die Methacrylsäure. Auch beliebige Mischungen der Monocarbonsäuren und insbesondere Mischungen der Acryl-und Methacrylsäure sind bevorzugte Komponenten (B).

Die Monomere vom Typ (C) sind das Methacrylamidopropyltrimethylammoniumchlorid (MAPTAC) oder das Acrylamidopropyltrimethylammoniumchlorid (APTAC) oder das Diallyldimethylammoniumchlorid (DADMAC).

Die erfindungsgemäß verwendeten Pfropfcopolymere können optional noch weitere Monomere enthalten, z.B. Hydroxyalkylester oder Ester von alkoxylierten Fettalkoholen, wobei solche Co-Monomeren aber nicht bevorzugt sind. In allen Fällen ist es möglich Mischungen unterschiedlicher Monomere (B) oder (C) einzusetzen und dabei ggf. auch Mischungen der Zuckerkomponente (A) zu verwenden. Die Pfropfcopolymere der vorliegenden Lehre sind wasserlöslich, d.h. dass sie vorzugsweise eine Löslichkeit in Wasser (gemessen bei 21 °C) von mindestens 1 g des Pfropfcopolymers in 100 g Wasser aufweisen, vorzugsweise aber größere Mengen z.B. 1O g pro 100 g Wasser, bei den angegebenen Bedingungen löslich sind.

Nicht umfasst sind von der Lehre der vorliegenden Anmeldung insbesondere solche Pfropfcopolymere, die als Monomerbestandteile Di- oder Polycarbonsäuren und hier insbesondere Maleinsäure oder Maleinsäureanhydrid enthalten. Die Pfropfcopolymere der Erfindung sind vielmehr in einer bevorzugten Ausführungsform frei von derartigen Dicarbonsäuren und insbesondere frei von Maleinsäure oder dessen Anhydrid.

Bevorzugte Pfropfcopolymere im Sinne der vorliegenden technischen Lehre sind dagegen solche bei denen der Gewichtsanteil der Monomeren (C) größer ist als der Anteil der Monomeren (B).

Die Bestandteile vom Typ (A) sind in den Polymeren der vorliegenden Erfindung in Mengen von 40 bis 90 Gew.-%, vorzugsweise von 40 bis 85 Gew.-%, jeweils bezogen auf das Gesamtgewicht aller Bestandteile (A), (B) und (C) des Pfropfcopolymers enthalten. Es gilt, dass ein erhöhter Anteil an Sacchariden vom Typ (A) zu einer verbesserten biologischen Abbaubarkeit der Propfcopolymere führt. Ein besonders bevorzugter Gewichtsbereich für die Komponente (A) liegt bei 70 bis 80 Gew.-%.
Die Monomeren vom Typ (B) sind in Mengen von 5 bis 40 Gew.-%, vorzugsweise von 5 bis 35 Gew.-% und insbesondere von 10 bis 30 Gew.-%, jeweils bezogen auf das Gesamtgewicht aller Bestandteile des Polymers enthalten. Die Monomeren vom Typ (C) sind in Mengen von 1O bis 50 Gew.-%, vorzugsweise von 1O bis 40 Gew.-% und besonders bevorzugt von 15 bis 30 Gew.-% jeweils bezogen auf das Gesamtgewicht aller Bestandteile des Polymers enthalten.

Ein bevorzugtes Pfropfcopolymer wird z.B. gebildet aus 50 bis 80 Gew.-% der Komponente (A) und die Monomeren (B) sind darin in Mengen von 1O bis 35 Gew.-% und die Monomeren (C) in Mengen von 1O bis 30 Gew.-% bezogen auf die Gesamtmenge an (A), (B) und (C) enthalten, wobei die Summe aus (A), (B) und (C) 100 Gew.-% ergeben muss.

Vorteilhaft ist es, wenn der Gewichtsanteil an Monomeren des Typs (C) höher ist als der Anteil der Monomeren (B). Pfropfcopolymere bei denen die Monomeren (B) und (C) ein Gewichtsverhältnis von 1 : 1 bis 1 : 2, vorzugsweise aber von 1 : 1,2 bis 1 : 1,5 und besonders bevorzugt von 1 : 1,2 bis 1 : 1,4 aufweisen sind deshalb besonders bevorzugt. Die Monomeren (B) und (C) weisen untereinander vorzugsweise ein molares Verhältnis von 4 : 1 bis 1 : 1 und insbesondere von 3 : 1 bis 2 : 1 auf.

Neben den Bestandteilen (A) bis (C) können die Pfropfcopolymere noch weitere einpolymerisierbare Komponenten aufweisen, die Mengen der Bestandteile müssen sich dann aber immer auf 100 % ergänzen, allerdings sind solche Pfropfcopolymere bevorzugt, die nur aus den Bestandteilen (A) bis (C) bestehen, wobei hier aber durch die Herstellung Initiatoren in den Pfropfcopolymeren enthalten sein können, allerdings nur in untergeordneten Mengen (< 1 Gew.%).

Bevorzugte Pfropfcopolymere enthalten als Komponente (A) Maltodex1rin, als Monomer (B) Acrylsäure und als Monomer (C) MAPTAC und/oder DADMAC, wobei diese bevorzugten Polymeren vorteilhafterweise zwischen 50 und 85 Gew.-% Maltodextrin, 1O bis 35 Gew.-% MAPTAC und 5 bis 30 Gew.-% Acrylsäure enthalten, mit der Maßgabe, dass sich die Gewichtsangaben von (A) bis (C) jeweils zu 100 Gew.-% addieren.
Das Molekulargewicht der erfindungsgemäßen Pfropfcopolymere liegt im Bereich von 5.000 bis 150.000 vorzugsweise von 8.000 bis 80.000 und insbesondere im Bereich von 10.000 bis 50.000. Die Pfropfcopolymere im Sinne der vorliegenden Erfindung sind in Bezug auf ihre Ladung als amphoter zu bezeichnen.

Die Propfcopolymere im Sinne der vorliegenden technischen Lehre können harte Oberflächen, wie Porzellan, Keramik, Metall, Glas, Kunststoff oder Stein, und insbesondere Keramik und Glas, hydrophilieren, d.h. das Wassertropfen, die auf die mit den Pfropfcopylmeren behandelten Oberflächen aufgetragen werden einen geringeren Kontaktwinkel aufweisen, verglichen mit einer unbehandelten Oberfläche. Das führt zu einer besseren Spreitung der Wassertropfen, die so besser einen Wasserfilm auf der Oberfläche ausbilden können, was makroskopisch zu einem verbesserten Ablauf von Wasser auf der jeweiligen Oberfläche führt. Diese Eigenschaft führt dazu, dass es nicht oder nur in geringerem Umfang auf den behandelten Oberflächen zu einer Belagbildung (sog. "filming" oder "spotting") kommt, was aus Sicht des Benutzers eine verbesserte Wirkung des Reinigungsmittels vermitteln kann.

Die erfindungsgemäß verwendeten Propfcopolymere führen in Kombination mit weiteren Tensiden zu einem verbesserten Glanzerhalt und im Besonderen zu einer Verbesserung der Glanzwahrnehmung der harten Oberflächen.
Glanz ist die physikalische Bezeichnung für die photometrisch bestimmbare Verhältniszahl aus dem gerichtet und dem diffus reflektierten Anteil des auf eine Fläche fallenden Lichtstromes. Umgangssprachlich bezeichnet man als Glanz die aus diesem Verhältnis resultierende Eigenschaft einer Licht reflektierenden Fläche, je nach Beleuchtungs- u. Beobachtungsrichtung unterschiedliche Helligkeitseindrücke hervorzurufen. Die Pfropfcopolymere, aufgebracht auf eine harte Oberfläche, führen zu einer Verlängerung der Glanzwahrnehmung, verglichen mit nicht-behandelten Oberflächen.

Ein weiterer Gegenstand der vorliegenden Erfindung betrifft wasserlösliche Pfropfcopolymere, hergestellt durch radikalisch initiierte Pfropfpolymerisation von 40 bis 90 Gew.-% Maltodextrin, 1O bis 40 Gew.-% 3-Trimethylammoniumpropylmethacrylamidchlorid und/oder Dimethyldiallylammoniumchlorid und 5 bis 30 Gew.-% Acrylsäure.

Die Propfcopolymere im erfindungsgemäßen Sinne sind gut biologisch abbaubar, d.h. dass sie mindesten 35 %, vorzugsweise mindestens 40 % und insbesondere zwischen 35 und 75 % Abbau nach 28 Tagen im OECD-C0₂ Evolution test according to 301 B (July 1992) aufweisen.

Ebenfalls Gegenstand der vorliegenden Anmeldung sind Reinigungsmittel, vorzugsweise solche für harte Oberflächen, die wasserlösliche Pfropfcopolymere, hergestellt durch radikalisch initiierte Pfropfcopolymerisation von 40 bis 90 Gew.-% einer Komponente (A), ausgewählt aus der Gruppe der Monosaccharide, Oligosaccharide, Polysaccharide und deren Derivate, mit 5 bis 40 Gew.-% an Monomeren (B), ausgewählt aus der Gruppe der ethylenisch ungesättigten C3-C1 O Monocarbonsäuren oder deren Alkali- oder Ammoniumsalze, und 1O bis50 Gew.-% Monomeren (C), ausgewählt aus der Gruppe Methacrylamidopropyltrimethylammoniumchlorid (MAPTAC), Acrylamidopropyltrimethylammoniumchlorid (APTAC) und/oder Diallyldimethylammoniumchlorid (DADMAC).
Besonders bevorzugt sind dabei solche Polymere, die hergestellt werden durch Polymerisation von 40 bis 90 Gew.-% Maltodextrin, 1O bis 40 Gew.-% 3-Trimethylammoniumpropylmethacrylamidchlorid und/oder Dimethyldiallylammoniumchlorid und 5 bis 40 Gew.-% Acrylsäure enthalten, wobei die Mengen der drei genannten Bestandteile sich zu 100 Gew.-% ergänzen müssen.

Die Pfropfcopolymere sind vorzugsweise in Mengen von 0,01 bis 15 Gew.-%, vorzugsweise in Mengen von 0,05 bis 1,0 Gew.-% und insbesondere in Mengen von 0,1 bis 0,5 Gew.-% in den Reinigungsmitteln enthalten.

Besonders bevorzugte Reinigungsmittel im Sinne der vorliegenden Erfindung sind Allzweck-, Glas-, Küchen-, Bad- oder Toilettenreiniger aber auch Geschirrspülmittel und hier besonders die Mittel für das automatische Geschirrspülen, wobei das Reinigungsmittel je nach Anforderung fest oder flüssig bzw. Gel-förmig sein kann. Auch gepresste oder anderweitig verdichtete feste Mittel, z.B. in Form von Granulaten, Extrudaten, Tabletten sind geeignet. Die Propfcopolymere eigenen sich insbesondere zur Einarbeitung in multifunktionale Mittel, die z.B. neben der Reinigungsfunktion noch eine Salzfunktion und/oder weitere Anwendungsbereiche (Klarspüler, Metallschutz etc. bei Geschirrspülmitteln) aufweisen.

Außerdem enthalten die Reinigungsmittel im Sinne der vorliegenden Erfindung noch mindestens einen tensidischen Bestandteil, ausgewählt aus der Gruppe der anionischen, nichtionischen, kationischen und/oder amphoteren Tenside.
Typische Beispiele für anionische Tenside sind Seifen, Alkylbenzolsulfonate, Alkansulfonate, Olefinsulfonate, Alkylethersulfonate, Glycerinethersulfonate, alpha-Methylestersulfonate, Sulfofettsäu ren, Alkylsulfate, Fettalkoholethersulfate, Glycerinethersulfate, Fettsäureethersulfate, Hydroxymischethersulfate, Monoglycerid(ether)sulfate, Fettsäureamid (ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren, wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionisehen Tenside Polyglycoletherketten enthalten, können diese eine konventionelle, vorzugsweise jedoch eine eingeengte Homologenverteilung aufweisen. Typische Beispiele für nichtionische Tenside sind Fettalkoholpolyglycolether, Alkylphenolpolyglycolether, Fettsäurepolyglycolester, Fettsäureamidpolyglycolether, Fettaminpolyglycolether, alkoxylierte Triglyceride, Mischether bzw. Mischformale, gegebenenfalls partiell oxidierte Alk(en)yloligoglykoside bzw. Glucoronsäurederivate, Fettsäure-N-alkylglucamide, Proteinhydrolysate (insbesondere pflanzliche Produkte auf Weizenbasis), Polyolfettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen.

Typische Beispiele für kationische Tenside sind quartäre Ammoniumverbindungen und Esterquats, insbesondere quaternierte Fettsäuretrialkanolaminestersalze. Typische Beispiele für amphotere bzw. zwitterionische Tenside sind Alkylbetaine, Alkylamidobetaine, Aminopropionate, Aminoglycinate, Imidazoliniumbetaine und Sulfobetaine. Bei den genannten Tensiden handelt es sich ausschließlich um bekannte Verbindungen.

Geeignet sind z.B. nichtionische Tenside und hierbei auch die alkoxylierten Fettalkohole oder alkoxylierte Fettsäuren mit 6 bis 22 C Atomen bzw. deren Derivate, die Alkyl(oligo)glycoside oder hydroxylierte Etherverbindungen.

Bevorzugte nicht-ionische oberflächenaktive Substanzen sind ausgewählt ist aus
a) Verbindungen der allgemeinen Formel (I)

   R¹O[CH₂CH₂O]ₓCH₂CH(OM)R² (I)

   in der R1 für einen linearen oder verzweigten Alkyl- und/oder Alkenylrest mit 4 bis 22 Kohlenstoffatomen bedeutet, oder für einen Rest R2-CH(OH)CH₂ steht, wobei R2 für einen linearen oder verzweigten Alkyl-und/oder Alkenylrest mit 8 bis 16 Kohlenstoffatomen, x für eine Zahl von 40 bis 80 steht, und M für ein Wasserstoffatom oder einen gesättigten Alkylrest mit 1 bis 18 Kohlenstoffatomen,
b) Verbindungen der Formel (II)

   R³O[CH₂CH₂O]_{y}[CH₂CHCH₃O]_{z}CH₂CH(OH)R⁴ (II)

   in der R3 für einen linearen oder verzweigten Alkyl- und/oder Alkenylrest mit 8 bis 22 Kohlenstoffatomen, R4 für einen linearen oder verzweigten Alkyl- und/oder Alkenylrest mit 8 bis 16 Kohlenstoffatomen, y für eine Zahl von 1O und 35 steht, z Null bedeutet oder eine Zahl von 1 bis 5, mit der Maßgabe, dass wenn R3 = R1 und gleichzeitig R4 = R2 ist, dass dann z mindestens 1 sein muss und/oder
c) ethoxylierten Fettalkoholen der allgemeinen Formel (III) R⁵-(0C₂H₄Iz-OH, in der R⁵ für lineare oder verzweigte Alkyl- und/oder Alkenylreste mit 8 bis 22 Kohlenstoffatomen steht und z eine Zahl von 1 bis 1O steht, und/oder
d) R₆CO-(OC₂H₄)m-OR⁷ , wobei R⁶ für einen Alkyl- und/oder Alkenylreste mit 7 bis 21 Kohlenstoffatomen und m für Zahlen von 11 bis 100 steht, und R⁷ ein Wasserstoffatom oder einen Rest CO-R⁶ bedeutet, und/oder
e) Alkyl(oligo)glycoside der allgemeinen Follllel RBQ-[G]p in der Ra für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht, und/oder
f) Betainen und/oder
g) Verbindungen der allgemeinen Formel (III) 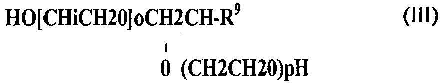 in der R9 für einen linearen oder verzweigten Alkyl- und/oder Alkenylrest mit 4 bis 22 Kohlenstoffatomen und o für eine Zahl von 1 bis 20 und der Index p für Null oder Zahlen von 1 bis 20 steht, und/oder
h) Verbindungen der allgemeinen Formel (IV)

   R¹⁰CH(OR¹¹)CH₂-OR¹¹ (IV)

   in der R10 für einen gesättigten oder ungesättigten, verzweigten oder unverzweigten Alkyl- oder alkenylrest mit 8 bis 16 Kohlenstoffatomen steht, und R11 jeweils unabhängig voneinander einen Rest (CH₂CH₂0),CH₂CH(OH)R12 symbolisieren, wobei r in jedem Rest R¹¹ unabhängig für Null oder eine Zahl von 1 bis 50 steht und R¹² einen gesättigten oder ungesättigten, verzweigten oder unverzweigten Alkyl-oder Alkenylrest mit 8 bis 16 Kohlenstoffatomen steht, und/oder
j) Verbindungen der allgemeinen Formel (V)

   NR¹³₃ (V)

   wobei R¹³ unabhängig voneinander für einen Rest (CH₂CH₂0)₈-CH₂CH(OH)R¹⁴ oder einen Alkylrest mit 8 bis 16 Kohlenstoffatomen steht und s für jeden einzelnen Rest **R¹³** unabhängig Null bedeutet, oder eine Zahl von 1 bis 50.

Besonders geeignete tensidische Verbindungen sind allgemein nichtionische Tenside, uns hier insbesondere die Alkylalkoxylate, also z.B. Verbindungen des Typs a) bis d) gemäß der obigen Aufstellung.

Neben den Tensiden können die Reinigungsmittel im Sinne der vorliegenden Erfindung noch weitere an sich übliche Inhaltsstoffe enthalten, wie z.B. Wasser, Lösungsmittel wie niedere Alkohole, hier insbesondere Ethanol, Propanol oder Butanol; Glykole; andere Polymere als die oben beschriebenen; Mittel zum Einstellen des pH-Wertes, z.B. organische Säuren wie Zitronensäure; Füllstoffe; Silikate; Komplexierungsmittel, Hydrotope; Parfüme; Farbstoffe; Enzyme, Antioxidantien; Konservierungsmittel; usw" Die Reinigungsmittel im Sinne der obigen Beschreibung, sofern sie wässerig sind, weisen pH-Werte vorzugsweise zwischen 3,5 und 11 auf.

Ein letzter Gegenstand betrifft ein Verfahren zur Herstellung von Pfropfcopolymeren gemäß der obigen Beschreibung, wobei man zuerst eine wässerige Lösung des Zuckerbestandteils (A), z.B. einem Maltodextrin, vorlegt, dann auf Temperaturen von 60 bis 95 °C erwärmt und danach eine Mischung der Monomeren (B) und (C) zusammen mit einem Radikalstarter zugibt und zur Reaktion bringt.
Das Verfahren lässt sich dahingehend vorteilhaft ausgestalten, dass man die Monomeren (B) und (C) zusammen mit einem Radikalstarter als Mischung nicht vollständig sondern z.B. portionsweise oder kontinuierlich, über einen längeren Zeitraum mit dem Zuckerbestandteil (A) reagieren lässt.
Eine zweite Variante sieht vor, zunächst nur einen Teil der Monomeren (B) oder (C) zur Zuckerkomponente (A) zuzugeben, den Rest dann aber in Abmischung als (B) und (C) nebeneinander, wobei bei jeder Zugabe der Monomeren immer auch ein Radikalstarter zugesetzt wird.
Eine besonders bevorzugte Variante sieht vor, dass zunächst die Zuckerkomponente (A) in Wasser vorgelegt und erwärmt wird, und anschließend, vorzugsweise in mehreren Zugabeschritten, eine Teilmenge des Monomeren (C) zusammen mit einem Radikalstarter zugesetzt und die Reaktion mit der Zuckerkomponente (A) abgewartet wird. Danach wird, vorzugsweise in mehreren Zugabeschritten, eine Mischung aus (B) und der restlichen Menge an (C) zusammen mit weiterem Radikalstarter zugegeben.

Wenn als Zuckerbestandteil eine nicht-wasserlösliche Form genutzt werden soll, muss diese zuerst durch Enzyme oder Säuren in eine wasserlösliche Form umgewandelt werden. Details sind der DE 195 03 116 A1 auf der Seite 8, Zeilen 31 bis 59 zu entnehmen.

Zur Initialisierung der radikalischen Polymerisation eignen sich die dem Fachmann dazu bekannten Radikalstarter, wie z.B. Azodiisobutyronitril (AIBN), Peroxide wie z.B. Benzoylperoxid, ferner Hydroperoxide und Perester. Besonders bevorzugt ist die Verwendung von Natriumperoxodisulfat und tert.-Butylhydroperoxid bzw. von Wasserstoffperoxid, die in den handelsüblichen Konzentrationen und Zubereitungen (z.B. als wässerige oder alkoholische Lösungen) Verwendung finden können. Auch können Mischungen aus H₂0₂ mit Eisen(II)salzen zum Einsatz kommen. Das Wasserstoffperoxid wird dabei vorzugsweise in Form wässeriger Lösungen verwendet. Die Radikalstarter werden vorzugsweise in Mengen von 0,001 bis 15 Mol-%, vorzugsweise von 0,1 bis 1O Mol-% und insbesondere von 1 bis 8 Mol-%, jeweils bezogen auf die molaren Mengen an Monomeren (B) und/oder (C) verwendet.

Die Polymerisationsreaktion selbstfindet vorzugsweise bei Temperaturen zwischen 60 und 95 °C, insbesondere von 70 bis 85 °C statt. Je nach Größe des Reaktionsansatzes dauert die Umsetzung zwischen wenigen Minuten und einigen Stunden.

Einletzter Gegenstand der vorliegenden Anmeldung betrifft wässerige Mittel, die zwischen 5 und 25 Gew.-%, vorzugsweise 1O bis 20 Gew.-% an Pfropfcopolymeren gemäß der obigen Beschreibung enthalten. Die Mittel werden z.B. durch die weiter oben beschriebene Polymerisationsreaktion in wässeriger Lösung erhalten. Es ist möglich, den pH-Wert des Mittels im Bereich von 3,5 bis 11 einzustellen, z.B. durch Zugabe von Säuren oder Basen.

### Beispiele

### Synthese

### Beispiel 1:

Ein erfindungsgemäßes Polymer wurde wie folgt hergestellt: In einem Rührreaktor wurden 151,8 g eines Stärkehydrolysats (Maltodextrin **MD** 01955, Firma Cerestar /enthält 7,8 % Feuchte) in 548,2 g Wasser vorgelegt. Das Gemisch wurde auf 80 °c erhitzt und über einen Zeitraum von 4 h eine Lösung von 90,4 g (205 mmol) 3-Trimethylammoniumpropylmethacrylamidchlorid (50%ig in Wasser, Firma Evonik), 14,9 g (205 mmol ) Acrylsäure (99%, Firma IMCD) in 100 g Wasser zugegeben. Parallel hierzu wurde eine Lösung von 7,0 g Natriumperoxodisulfat (29,4 mmol) in 85 g Wasser zugegeben. Anschließend rührte man weitere 2 h bei 80°C und kühlte anschließend auf 60°C. Nun wurden eine Lösung von 1,0 g Natriummetabisulfit in 9 g Wasser und 0,7 g tert.-Butylhydroperoxid in 1,8 g Wasser zugegeben. Anschließend wurde für 2 h bei 60°C gerührt. Dann wurde durch die Zugabe von 32%iger wässriger Natronlauge der pH-Wert auf 6,0 eingestellt. Das fertige Produkt besitzt einen Aktivgehalt von 20%.

### Beispiel 2:

Ein weiteres erfindungsgemäßes Polymer wurde wie folgt hergestellt: In einem Rührreaktor wurden 151,8 g eines Stärkehydrolysats (Maltodextrin MD 01955, Firma Cerestar / enthält 7,8 % Feuchte)) in 548,2 g Wasser vorgelegt. Das Gemisch wurde auf 80 °C erhitzt und über einen Zeitraum von 2 h eine Lösung von 34,0 g (77 mmol) 3-Trimethylammoniumpropylmethacrylamidchlorid (50%ig in Wasser, Firma Evonik) und 39,2 g Wasser in 4 Portionen zugegeben. Parallel hierzu wurde eine Lösung von 3,5 g (14,7 mmol) Natriumperoxodisulfat in 35 g Wasser zugegeben. In weiteren 2h wurde eine Lösung von 34,0 g (77 mmol) 3-Trimethylammoniumpropylmethacrylamidchlorid (50%ig in Wasser, Firma Evonik), 26,0 g (357 mmol) Acrylsäure (99%, Firma IMCD) und 26,6 g Wasser, deren pH-Wert durch Zugabe von 32%iger Natronlauge auf pH 6 eingestellt worden war, in 4 Portionen zugegeben. Parallel hierzu wurde eine Lösung von 3,5 g (14,7 mmol) Natriumperoxodisulfat in 35 g Wasser zugegeben. Anschließend rührte man weitere 2 h bei 80°C und kühlte anschließend auf 60°C. Nun wurden eine Lösung von 1,0 g Natriummetabisulfit in 9 g Wasser und 0,7 g tert.-Butylhydroperoxid in 1,8 g Wasser zugegeben. Anschließend wurde für 2 h bei 60°C gerührt. Dann wurde durch die Zugabe von 32%iger wässriger Natronlauge der pH-Wert auf 6,0 eingestellt. Das fertige Produkt besitzt einen Aktivgehalt von 20%.

### Beispiel 3:

Ein erfindungsgemäßes Polymer wurde wie folgt hergestellt: In einem Rührreaktor wurden 108,5 g eines Stärkehydrolysats (Maltodextrin MD 01955 der Firma Cerestar /enthält 7,8 % Feuchte) in 391,5 g Wasser vorgelegt. Das Gemisch wurde auf 80°C erhitzt und über einen Zeitraum von 6 h eine Lösung von 113,4 g (257 mmol) 3-Trimethylammoniumpropyl-methacrylamidchlorid (50%ig in Wasser, Firma Evonik) und 43,9 g (603 mmol) Acrylsäure (99% von Firma IMCD) in 177,8 g Wasser kontinuierlich zugegeben. Parallel hierzu wird eine Lösung von 7,0 g (29,4 mmol) Natriumperoxodisulfat in 85 g Wasser zugegeben. Anschließend wurde die Lösung weitere 2 h bei 80°C gerührt und anschließend auf 50°C abgekühlt. Danach wurde eine Lösung von 1,0 g (5,3 mmol) Natriummetabisulfit in 9,0 g Wasser und 0,7 g tert.-Butylhydroperoxid (70%ig) in 1,8 g Wasser zugegeben. Anschließend wurde 30 Minuten bei 50°C gerührt. Das fertige Produkt besitzt einen Aktivgehalt von 20%.

### Beispiel 4:

Ein weiteres erfindungsgemäßes Polymer wurde wie folgt hergestellt: In einem Rührreaktor wurden 160,9 g eines Stärkehydrolysats (Maltodextrin MD 01955, Firma Cerestar / enthält 6,8 % Feuchte) in 589, 1 g Wasser vorgelegt.
Das Gemisch wurde auf 80 °C erhitzt und über einen Zeitraum von 2 h eine Lösung von 28,4 g (64 mmol) 3-Trimethylammoniumpropylmethacrylamidchlorid (50%ig in Wasser, Firma Evonik) und 8,6 g Wasser in 4 Portionen zugegeben. Parallel hierzu wurde eine Lösung von 3,5 g (14,7 mmol) Natriumperoxodisulfat in 35 g Wasser zugegeben. In weiteren 2h wurde eine Lösung von 28,4 g (64 mmol) 3-Trimethylammoniumpropylmethacrylamidchlorid (50%ig in Wasser, Firma Evonik), 21,9 g (301 mmol) Acrylsäure (99%, Filllla IMCD) und 9,8 g Wasser, deren pH -Wert durch Zugabe von 32%iger Natronlauge auf pH 7 eingestellt worden war, in 4 Portionen zugegeben. Parallel hierzu wurde eine Lösung von 3,5 g (14,7 mmol) Natriumperoxodisulfat in 35 g Wasser zugegeben. Anschließend rührte man weitere 2 h bei 80°C und kühlte anschließend auf 60°C. Nun wurden eine Lösung von 0,65 g Natriummetabisulfit in 5,85 g Wasser und 0,7 g tert.-Butylhydroperoxid (70%ig) in 1,8 g Wasser zugegeben. Anschließend wurde für 2 h bei 60°C gerührt. Danach wurde pH-Wert 5,5 durch Zugabe von Citronensäure eingestellt. Das fertige Produkt besitzt einen Aktivgehalt von 20%.

### Beispiel 5:

Ein nicht erfindungsgemäßes Polymer wurde wie folgt hergestellt: In einem Rührreaktor wurden 107,3 g eines Stärkehydrolysats (Maltodextrin MD 01955, Filllla Cerestar /enthält 6,8 % Feuchte) in 392,7 g Wasser vorgelegt. Das Gemisch wurde auf 80°C erhitzt und über einen Zeitraum von 2 h eine Lösung von 22,1 g (105,6 mmol) 2-Acrylamido- 2-methylpropansulfonsäure (99 %, Filllla Lubrizol), 7,7 g (105,Bmmol) Acrylsäure (99%, Firma IMCD) und 75 g Wasser, welche mit 32 %iger Natronlauge auf pH 6 eingestellt wurde, zugegeben. Parallel hierzu wird eine Lösung von 3,5 g (14,7 mmol) Natriumperoxodisulfat in 42,5 g Wasser zugegeben. Anschließend wurde und über einen Zeitraum von 2 h eine Lösung von 22,1 g (105,6 mmol) 2-Acrylamido-2-methylpropansulfonsäure (99 %, Firma Lubrizol ), 7,7 g (105,8mmol ) Acrylsäure (99%, Firma MCD) und 80,7 g (183 mmol) 3-Trimethylammoniumpropylmethacrylamidchlorid (50%ig in Wasser, Firma Evonik) in 125 g Wasser und 25,5 g 32 %iger Natronlauge ( in 4 Portionen ) zugegeben. Parallel hierzu wird eine Lösung von 3,5 g (14,7 mmol) Natriumperoxodisulfat in 42,5 g Wasser zugegeben. Anschließend wurde die Lösung weitere 2 h bei 80°C gerührt und anschließend auf 60°C abgekühlt. Danach wurde eine Lösung von 1,0 g (5,3 mmol) Natriummetabisulfit in 9,0 g Wasser und 0,7 g tert.-Butylhydroperoxid (70%ig) in 1,8 g Wasser zugegeben. Anschließend wurde 2 h bei 60°C gerührt. Dann wurde durch die Zugabe von 32%iger wässriger Natronlauge der pH-Wert auf pH 6,0 eingestellt. Das fertige Produkt besitzt einen Aktivgehalt von 20%.

### Beispiel 6:

Ein weiteres erfindungsgemäßes Polymer wurde wie folgt hergestellt: In einem Rührreaktor wurden 150,2 g eines Stärkehydrolysats (Maltodextrin MD 01955, Firma Cerestar / enthält 6,8 % Feuchte) in 549,8 g Wasser vorgelegt. Das Gemisch wurde auf 80 °C erhitzt und über einen Zeitraum von 2 h eine Lösung von 32,0 g (72,6 mmol) 3-Trimethylammoniumpropylmethacrylamidchlorid (50%ig in Wasser, Firma Evonik), 1,5 g (6 mmol) Diallyldimethylammoniumchlorid (65%ig in Wasser, Firma Aldrich) und 26,6 g Wasser zugegeben. Parallel hierzu wurde eine Lösung von 3,5 g (14,7 mmol) Natriumperoxodisulfat in 35 g Wasser zugegeben. In weiteren 2h wurde eine Lösung von 32,0 g (72,6 mmol) 3-Trimethylammoniumpropylmethacrylamidchlorid (50%ig in Wasser, Firma Evonik), 3,7 g ( 14,9 mmol ) Diallyldimethylammoniumchlorid ( 65%ig in Wasser, Firma Aldrich ), 24,6 g ( 338 mmol ) Acrylsäure (99%, Firma IMCD) und 26,6 g Wasser, deren pH-Wert durch Zugabe von 32%iger Natronlauge auf pH 7 eingestellt worden war, zugegeben. Parallel hierzu wurde eine Lösung von 3,5 g (14,7 mmol) Natriumperoxodisulfat in 35 g Wasser zugegeben. Anschließend rührte man weitere 2 h bei 80°C und kühlte anschließend auf 60°C. Nun wurden eine Lösung von 0,65 g Natriummetabisulfit in 5,85 g Wasser und 0,7 g tert.-Butylhydroperoxid in 1,8 g Wasser zugegeben. Anschließend wurde für 2 h bei 60°C gerührt. Der pH-Wert 5,5 wurde durch Zugabe von 10%iger Salzsäure eingestellt Das fertige Produkt besitzt einen Aktivgehalt von 20%.

### Beispiel 7

Ein weiteres erfindungsgemäßes Polymer wurde wie folgt hergestellt: In einem Rührreaktor wurden 173,4 g eines Stärkehydrolysats (Maltodextrin MD 01955 der Firma Cerestar / enthält 6,8 % Feuchte)) in 600,0 g Wasser vorgelegt. Das Gemisch wurde auf 80 °C erhitzt und über einen Zeitraum von 4 h eine Lösung von 30,3 g (11O mmol) (3-Acrylamidopropyl)-trimethylammoniumchlorid (75%ig in Wasser, Firma Aldrich), 17,5 g (240,4 mmol) Acrylsäure (99% von Firma IMCD) und 54 g Wasser, deren pH -Wert durch Zugabe von 32%iger Natronlauge auf pH 7,0 eingestellt worden war, in 8 Portionen zugegeben. Parallel hierzu wurde eine Lösung von 7,0 g (29,4 mmol) Natriumperoxodisulfat in 70 g Wasser zugegeben. Anschließend rührte man weitere 2 h bei 80°C und kühlte anschließend auf 60°C. Nun wurden eine Lösung von 0,65 g Natriummetabisulfit in 5,85 g Wasser und 0,7 g tert.-Butylhydroperoxid in 1,8 g Wasser zugegeben. Anschließend wurde für 2 h bei 60°C gerührt. Danach wurde pH-Wert 5,5 durch Zugabe von Citronensäure eingestellt. Das fertige Produkt besitzt einen Aktivgehalt von 20%.

### Anwendungstechnische Überprüfung

### Biologischer Abbau:

Zur Messung der biologischen Abbaubarkeit wurde ein modifizierte Sturm-Test (OECD-C0₂ Evolution Test gemäß 301 B (Juli 1992) verwendet. Hierzu wurde das Polymer in einem wässerigen Medium, enthaltend Kaliumdihydrogenphosphat, Dikaliumhydrogenphosphat Dinatriumhydrogenphosphathydrat, Ammoniumchlorid, Calciumchloridhydrat, Magnesiumsulfathydrat und Eisen(III)chloridhydrat zusammen mit aktiviertem Schlamm inokuliert und unter C0₂-freier Atmosphäre bei diffusem Licht 28 Tage aufbewahrt. Das während des Versuchs durch Abbau frei gesetzte Kohlendioxid wurde aufgefangen und quantitativ bestimmt. Unter Berücksichtigung des theoretisch möglichen C0₂-An-falls bei vollständigem Abbau wurde der gemessene Abbau als prozentualer Wert bestimmt.
Alle erfindungsgemäßen Polymere der obigen Beispiele 1 bis 7 weisen eine biologische Abbaubarkeit von 39 bis 72 % nach 28 Tagen auf.

### Hydrophilierung von Oberflächen:

Die hydrophilisierenden Eigenschaften der Polymere werden durch das Ablaufverhalten auf Prüfkörpern (bevorzugt schwarze Keramikfliesen) beurteilt. Dazu werden jeweils 25 Tropfen Prüflösung (in 5 Reihen mit 5 Tropfen pro Reihe) mittels einer 3mL - Einmaipipette auf eine gereinigte Kachel aufgebracht und mittels eines gefalteten Papiertuchs verteilt. Die Verteilung erfolgt durch Wischen ohne Druck, wobei die Kacheloberfläche in 1O Reihen von oben nach unten und unten nach oben nach rechts und dasselbe in 10 Reihen nach links gewischt wird. Durch Überleiten von Leitungswasser wird das Ablaufverhalten und durch Besprühen mit VE-Wasser die Anti-Rain Eigenschaften beurteilt. Eine gute Hydrophilisierung ist erkennbar durch die Ausbildung eines vollständigen Wasserfilms, der während der Ablauf und Trockenzeit nicht in sich aufreißt.

### Anti-Rain-Test

Aus einer 3mL Einmal- Pipette werden 25 Tropfen Reiniger in 5 Reihen mit 5 Tropfen pro Reihe auf eine gereinigte trockene Kachel aufgebracht und mit einem gefalteten Papiertuch (Kimwipes® von Kimberly Clark) verteilt. Die Verteilung erfolgt durch Wischen ohne Druck, wobei die Kacheloberfläche in 1O Reihen von oben nach unten und direkt anschließend zurück in 10 Reihen von unten nach oben gewischt wird. Nach Trocknung der Prüflösung wird die Oberfläche im Strahl mit Leitungswasser abgespült, wobei der Wasserstrahl einmal über die Kacheloberfläche geführt wir. Nach vollständigem Ablauf des Wasserfilms wird die Oberfläche 4 X aus einer Trigger-Flasche mit VE-Wasser besprüht. Die Art der dabei erreichten Tropfenverteilung dient als Maß für die Anti - Rain Eigenschaften. Als Referenz sind dazu die Parameter
1 = vollständiger Film
2 = Tropfenvereinigensich
3 = Tropfen/Streifen
4 = Tropfen isoliert festgelegt worden.

### Glanztest:

Zunächst wurde eine gereinigte, unbehandelte Keramikkachel mit einem Reflektometer auf Glanz vermessen. Eine Testformulierung wurde auf einer Keramikplatte, wie oben beschrieben, aufgetragen, verwischt und trocknen gelassen. Die resultierende Oberfläche wurde wiederum auf Glanz geprüft und mit dem Wert der ursprünglichen, sauberen Oberfläche vergleichen. Aus den Werten wurde der Glanzerhalt in Prozent berechnet. Der Glanz wurde mit dem Messgerät Micro-TRI-Gloss der Firma BYK Gardner bei einem Winkel von 20° gemessen.
In allen Fällen führte der Zusatz der erfindungsgemäßen Polymeren zu einer deutlichen Absenkung des Kontaktwinkels, einer besseren Spreitung von Leitungswasser und einer Verbesserung der Glanz-Werte der behandelten Oberflächen. Die Ergebnisse des Glanz-Tests sind in der Tabelle 1 aufgeführt.

### Kontaktwinkeltest

Die Kontaktwinkel wurden auf verschiedenen Oberflächen (Keramik, Glas, Edelstahl) gemessen, indem eine Testformulierung aufgetragen und verwischt wurde. Nach dem Eintrocknen wurde mit voll entsalztem (VE) Wasser gespült und trocknen gelassen. Auf den so präparierten Oberflächen wurde der Kontaktwinkel mit VE-Wasser gemessen (Apparatur: Kontaktwinkelmessgerät der Fa. Dataphysics, Filderstadt, Modell OCAH-200).

Es wurden die erfindungsgemäßen Polymere aus den Beispielen 1 bis B in Kombination mit einem ethoxylierten Fettalkohol (Isodecanol B EO) als tensidischer Komponente untersucht. Zusätzlich wurden die Vergleichsprodukte Sokalan® HP 70 (ein wasserlösliches Homo- oder Copolymers mit Vinylpyrrolidon, Vinylimidazol und nichtionischen Monomeren der BASG), Mirapol® Surf-S 110 und Mirapol® Surf-S 210 (beide Rhodia; Ammoniumacrylamid/Acrylsäurecopolymere) gemessen.

### Ergebnisse der physikalischen und anwendungstechnischen Tests:

**Tabelle 1. Glanzerhalt**

| Formulierung | Glanzerhalt |
|---|---|
| 1,0% Isodecanol + B EO | 79,1% |
| 0,1% AS Beispiel 1 + 1,0% Isodecanol + 8 EO | 88,7 % |
| 0,1% AS Beispiel 2 + 1,0% Isodecanol + 8 EO | 88,7 % |
| 0,1 % AS Beispiel 3 + 1,0 % Isodecanol + 8 EO | 87,9% |
| 0,1 % AS Beispiel 4 + 1,0 % Isodecanol + 8 EO | 87,0% |
| 0,1 % AS Beispiel 5 + 1,0 % Isodecanol + 8 EO | 81,8 % |
| 0,1 % AS Beispiel 6 + 1,0 % Isodecanol + 8 EO | 88,5 % |
| 0,1 % AS Beispiel 7 + t,O % Isodecanol + 8 EO | 87,5 % |
| 0,1% AS Sakalan® HP 70 + 1,0% Isodecanol + EO | 85,1% |
| 0,1%AS Mirapol®Suli-S 11O + 1,0%Isodecanol +8 EO | 77,7% |
| 0,1%AS Mirapal®Suli-S21O + 1,0%Isodecanol +8 EO | 74,4% |
| 0,1% Polyquaternium 6 + 1,0% Isodecanol + B EO | 79,9% |
| 0,1% Polyquaternium 7 + 1,0% Isodecanol + 8 EO | 74,8% |
| Polyquaternium 6: Diallyldimethylammoniumchloridhomopolymer | |
| Polyquaternium 7: Dimethyldiallylammoniumchloridacrylamidcopolymer | |
| AS : Aktivsubstanz | |

**Tabelle 2 :Kontaktwinkel auf schwarzen Keramikfliesen**

| Formulierung | Kontaktwinkel von Wasser |
|---|---|
| unbehandelt | 25° |
| 0,1% AS Beispiel 2 + 1,0% Isodecanol + 8 EO | 7° |
| 0,1% AS Beispiel 3 + 1,0% Isodecanol + 8 EO | 40 |
| 0,1% AS Beispiel 4 + 1,0% Isodecanol + 8 EO | 7° |
| 0,1% AS Sokalan® HP 70 + 1,0% Isodecanol + 8 EO | 40 |
| 0,1% AS Mirapol®Suli-S 11O+1,0% Isodecanol + 8 EO | 90 |
| 0,1% AS Mirapol®Suli-S21o+1,0% Isodecanol + 8 EO | 14° |

**Tabelle 3 : Kontaktwinkel auf Glas**

| Formulierung | Kontaktwinkel von Wasser |
|---|---|
| unbehandelt | 39° |
| 0,1% AS Beispiel 2 + 1,0% Isodecanol + 8 EO | 17° |
| 0,1% AS Beispiel 3 + 1,0% Isodecanol + 8 EO | 15° |
| 0,1% AS Beispiel 4 + 1,0% Isodecanol + 8 EO | 17° |
| 0,1% AS Sokalan® HP 70 + 1,0% Isodecanol + 8 EO | 90 |
| 0,1% AS Mirapol® Suli-S 11O+1,0% Isodecanol + 8 EO | 15° |
| 0,1% AS Mirapol® Suli-S21O+1,0% Isodecanol + 8 EO | 17° |

**Tabelle 4. Kontaktwinkel auf Edelstahl**

| Formulierung | Kontaktwinkel von Wasser |
|---|---|
| unbehandelt | 60° |
| 0,1% AS Beispiel 3 + 1,0% Isodecanol + 8 EO | 52° |
| 0,1% AS Beispiel 4 + 1,0% Isodecanol + 8 EO | 47' |
| 0,1%AS Sokalan® HP 70 + 1,0% Isodecanol + 8 EO | 55° |

Die Ergebnisse zeigen, dass die eliindungsgemäßen Polymeren geeignet sind den Kontaktwinkel von Wasser auf anorganischen Obelilächen zu verringern (hydrophilisieren).

### Ablaufverhalten von Wasser und Anti-Rain-Verhalten:

Für alle Testprodukte wird nach dem Spülen mit Leitungswasser (16°dH) das Benetzungsverhalten des Wasseliilms und das zeitliche Ablauf- und Trocknungsverhalten beurteilt. Um das Anti-Rain-Verhalten zu beurteilen wird VE-Wasser mit einer handelsüblichen Triggelilasche als Sprühnebel auf die Obeliläche gesprüht und das Vereinigen der Wassertröpfchen beurteilt. Die erfindungsgemäßen Produkte zeigen jeweils vollständige Benetzung der Oberfläche, einen Ablauf ohne Aufreißen des Wasserfilms sowie Trocknung ohne Rückstände. Bei einer unbehandelten Kachel war ein unregelmäßiger Film zu beobachten, sowie Trocknungsrückstände.

## Patentansprüche

1. Verwendung von wasserlöslichen Pfropfcopolymeren, hergestellt durch radikalisch initiierte Pfropfpolymerisation von
40 bis 90 Gew.-% Komponente (A), ausgewählt aus der Gruppe der Monosaccharide, Oligosaccharide, Polysaccharide und deren Derivate, mit
5 bis 40 Gew.-% Monomeren (B), ausgewählt aus der Gruppe der ethylenisch ungesättigten C3-C10 Monocarbonsäuren oder deren Alkali- oder Ammoniumsalze, und
10 bis 50 Gew.-% Monomeren (C), ausgewählt aus der Gruppe 3-Trimethylammoniumpropylmethacrylamidchlorid, Acrylamidopropyltrimethylammoniumchlorid und/oder Dimethyldiallylammoniumchlorid, wobei die Pfropfcopolymere frei von Di- oder Polycarbonsäuren als Monomerbestandteile und insbesondere frei von Maleinsäure oder Maleinsäureanhydrid sind
in Reinigungsmitteln, die neben dem Pfropfpolymeren mindestens noch eine tensidische Komponente enthalten, zur Hydrophilierung und/oder Verbesserung der Glanzerhaltes von harten Oberflächen, die mit diesen Reinigungsmitteln in Kontakt gebracht worden sind.

2. Verwendung nach Anspruch 1, **dadurch gekennzeichnet, dass** in den wasserlöslichen Pfropfcopolymeren der Gewichtsanteil der Monomeren (C) größer ist als der Anteil der Monomeren (B).

3. Verwendung nach mindestens einem der Ansprüche 1 oder 2, **dadurch gekennzeichnet, dass** die Pfropfcopolymerisate als Komponente der Gruppe (A) hydrolytisch abgebaute Polysaccharide, insbesondere Maltodextrine enthalten.

4. Verwendung nach mindestens einem der Ansprüche 1 bis 3, **dadurch gekennzeichnet, dass** die Pfropfcopolymerisate als Monomeren der Gruppe (B) Acrylsäure und/oder Methacrylsäure enthalten.

5. Verwendung nach mindestens einem der Ansprüche 1 bis 4, **dadurch gekennzeichnet, dass** Pfropfcopolymere eingesetzt werden, bei denen die Komponente (A) in Mengen von 50 bis 80 Gew.-%, die Monomeren (B) in Mengen von 15 bis 35 Gew.-% und die Monomeren (C) in Mengen von 10 bis 20 Gew.-% bezogen auf die Gesamtmenge an (A), (B) und (C) enthalten sind.

6. Verwendung nach mindestens einem der Ansprüche 1 bis 5, **dadurch gekennzeichnet, dass** Pfropfcopolymere eingesetzt werden, bei denen die Monomeren (B) und (C) ein Gewichtsverhältnis von 1 : 1,5 bis 1 : 1,4 aufweisen.

7. Wasserlösliche Pfropfcopolymere, hergestellt durch radikalisch initiierte Pfropfpolymerisation von 45 bis 90 Gew.-% Maltodextrin, 10 bis 40 Gew.-% 3-Trimethylammoniumpropylmethacrylamidchlorid und/oder Dimethyldiallyl-ammoniumchlorid und 5 bis 30 Gew.-% Acrylsäure, wobei die Pfropfcopolymere frei von Di- oder Polycarbonsäuren als Monomerbestandteile und insbesondere frei von Maleinsäure oder Maleinsäureanhydrid sind.

8. Reinigungsmittel, enthaltend mindestens ein Tensid und ein Pfropfcopolymer gemäß der Beschreibung im Anspruch 1 oder im Anspruch 7, sowie ggf. Wasser und weitere Inhaltsstoffe.

9. Verfahren zur Herstellung von Pfropfcopolymeren gemäß der Beschreibung der Ansprüche 1 oder 6, **dadurch gekennzeichnet, dass** man eine wässerige Lösung des Bestandteils (A) vorlegt, auf Temperaturen von 70 bis 85 °C erwärmt und dann eine Mischung der Monomeren (B) und/oder (C) zusammen mit einem Radikalstarter gegebenenfalls in mehreren Schritten zugibt und zur Reaktion bringt.

10. Wässeriges Mittel, enthaltend 5 bis 25 Gew.-% an Pfropfcopolymeren gemäß der Beschreibung im Anspruch 1.

## Claims

1. Use of water-soluble graft copolymers prepared by free-radically initiated graft polymerization of 40 to 90% by weight of component (A) selected from the group of monosaccharides, oligo-saccharides, polysaccharides and derivatives thereof, with
5 to 40% of monomers (B) selected from the group of ethylenically unsaturated C3-C10 mono-carboxylic acids or alkali metal or ammonium salts thereof, and
10 to 50% by weight of monomers (C) selected from the group of 3-trimethylammonium propylmethacrylamide chloride, acrylamidopropyl trimethylammonium chloride and/or dimethyldiallylammonium chloride, wherein the graft copolymers are free from di- or polycarboxylic acids as monomer constituents and in particular free from maleic acid or maleic anhydride,
in cleaning compositions which, as well as the graft polymer, also comprise at least one surface-active component, for the hydrophilization and/or improvement in shine retention of hard surfaces which have been brought into contact with these cleaning compositions.

2. Use according to Claim 1, **characterized in that**, in the water-soluble graft copolymers, the weight fraction of the monomers (C) is larger than the fraction of the monomers (B).

3. Use according to at least one of Claims 1 and 2, **characterized in that** the graft copolymers comprise hydrolytically degraded polysaccharides, in particular maltodextrins, as component of group (A).

4. Use according to at least one of Claims 1 to 3, **characterized in that** the graft copolymers comprise acrylic acid and/or methacrylic acid as monomers of group (B).

5. Use according to at least one of Claims 1 to 4, **characterized in that** graft copolymers are used in which the component (A) is present in amounts of from 50 to 80% by weight, the monomers (B) are present in amounts of from 15 to 35% by weight and the monomers (C) are present in amounts of from 10 to 20% by weight, based on the total amount of (A), (B) and (C).

6. Use according to at least one of Claims 1 to 5, **characterized in that** graft copolymers are used in which the monomers (B) and (C) have a weight ratio of from 1:1.5 to 1:1.4.

7. Water-soluble graft copolymers prepared by free-radically initiated graft polymerization of from 45 to 90% by weight of maltodextrin, 10 to 40% by weight of 3-trimethylammonium propylmethacrylamide chloride and/or dimethyldiallylammonium chloride and 5 to 30% by weight of acrylic acid, wherein the graft copolymers are free from di- or polycarboxylic acids as monomer constituents and in particular free from maleic acid or maleic anhydride.

8. Cleaning composition comprising at least one surfactant and one graft copolymer according to the description in Claim 1 or in Claim 7, and optionally water and further ingredients.

9. Process for preparing graft copolymers according to the description of Claims 1 or 6, **characterized in that** an aqueous solution of constituent (A) is introduced as initial charge and heated to temperatures of from 70 to 85°C, and then a mixture of monomers (B) and/or (C), together with a free-radical initiator, is added, where appropriate in two or more steps, and the mixture is reacted.

10. Aqueous composition comprising 5 to 25% by weight of graft copolymers according to the description in Claim 1.

## Revendications

1. Utilisation de copolymères greffés solubles dans l'eau, fabriqués par polymérisation-greffage à initiation radicalaire de
40 à 90 % en poids d'un composant (A), choisi dans le groupe des monosaccharides, oligosaccharides, polysaccharides et leurs dérivés, avec
5 à 40 % en poids de monomères (B), choisis dans le groupe des acides monocarboxyliques éthyléniquement insaturés en C3-C10 ou leurs sels d'alcali ou d'ammonium, et
10 à 50 % en poids de monomères (C), choisis dans le groupe du chlorure de 3-triméthylammoniumpropylméthacrylamide, du chlorure d'acrylamidopropyltriméthylammonium et/ou du chlorure de diméthyldiallylammonium, les copolymères greffés étant exempts d'acides di- ou polycarboxyliques comme constituants monomères et notamment exempts d'acide maléique ou d'anhydride de l'acide maléique,
dans des agents de nettoyage qui, outre les polymères greffés, contiennent également au moins un composant tensioactif, pour l'hydrophilisation et/ou l'amélioration de la préservation de la brillance de surfaces dures qui ont été mises en contact avec ces agents de nettoyage.

2. Utilisation selon la revendication 1, **caractérisée en ce que** la proportion en poids des monomères (C) dans les copolymères greffés solubles dans l'eau est supérieure à la proportion des monomères (B).

3. Utilisation selon au moins l'une quelconque des revendications 1 ou 2, **caractérisée en ce que** les copolymères greffés contiennent en tant que composant du groupe (A) des polysaccharides décomposés hydrolytiquement, notamment des maltodextrines.

4. Utilisation selon au moins l'une quelconque des revendications 1 à 3, **caractérisée en ce que** les copolymères greffés contiennent en tant que monomères du groupe (B) de l'acide acrylique et/ou de l'acide méthacrylique.

5. Utilisation selon au moins l'une quelconque des revendications 1 à 4, **caractérisée en ce que** des copolymères greffés qui contiennent le composant (A) en quantités de 50 à 80 % en poids, les monomères (B) en quantités de 15 à 35 % en poids et les monomères (C) en quantités de 10 à 20 % en poids, par rapport à la quantité totale de (A), (B) et (C), sont utilisés.

6. Utilisation selon au moins l'une quelconque des revendications 1 à 5, **caractérisée en ce que** des copolymères greffés dont les monomères (B) et (C) présentent un rapport en poids de 1:1,5 à 1:1,4 sont utilisés.

7. Copolymères greffés solubles dans l'eau, fabriqués par polymérisation-greffage à initiation radicalaire de 45 à 90 % en poids de maltodextrine, 10 à 40 % en poids de chlorure de 3-triméthylammoniumpropylméthacrylamide et/ou de chlorure de diméthyldiallylammonium et 5 à 30 % en poids d'acide acrylique, les copolymères greffés étant exempts d'acides di- ou polycarboxyliques comme constituants monomères et notamment exempts d'acide maléique ou d'anhydride de l'acide maléique.

8. Agent de nettoyage, contenant au moins un tensioactif et un copolymère greffé selon la description de la revendication 1 ou de la revendication 7, ainsi qu'éventuellement de l'eau et des composants supplémentaires.

9. Procédé de fabrication de copolymères greffés selon la description des revendications 1 ou 6, **caractérisé en ce qu'**une solution aqueuse du constituant (A) est chargée initialement, portée à des températures de 70 à 85 °C, puis un mélange des monomères (B) et/ou (C) accompagné d'un démarreur radicalaire est ajouté éventuellement en plusieurs étapes et mis en réaction.

10. Agent aqueux, contenant 5 à 25 % en poids de copolymères greffés selon la description de la revendication 1.
